# EUROPÄISCHE PATENTSCHRIFT

(11) **EP 3 215 336 B1**
(45) Veröffentlichungstag und Bekanntmachung des Hinweises auf die Patenterteilung: **24.04.2019**
(21) Anmeldenummer: 15790932.6
(22) Anmeldetag: 05.11.2015
(51) Int. Cl.: B29B 11/16

(54) **ANLAGE UND VERFAHREN ZUR KONTINUIERLICHEN HERSTELLUNG GEKRÜMMTER PREFORMEN**
SYSTEM AND METHOD FOR THE CONTINUOUS PRODUCTION OF CURVED PREFORMS
INSTALLATION ET PROCÉDÉ DE FABRICATION EN CONTINU DE PRÉFORMES COURBÉES

(30) Priorität: 07.11.2014 DE 102014116270
(43) Veröffentlichungstag der Anmeldung: 13.09.2017
(73) Patentinhaber: Deutsches Zentrum für Luft- und Raumfahrt e.V., 51147 Köln (DE)
(72) Erfinder: STAHL, Arne, 38106 Braunschweig (DE); BORGWARDT, Henrik, 38118 Braunschweig (DE); DEHN, Sascha, 80797 München (DE)
(74) Vertreter: Gramm, Lins & Partner Patent- und Rechtsanwälte PartGmbB
(86) Internationale Anmeldenummer: PCT/EP2015/075823
(87) Internationale Veröffentlichungsnummer: WO 2016/071451

(56) Entgegenhaltungen:
- EP-A1- 2 722 145
- EP-A2- 2 633 965
- WO-A2-2010/007416
- WO-A2-2010/007417
- DE-U1-202014 100 927

## Beschreibung

Die Erfindung betrifft eine Anlage zur kontinuierlichen Herstellung einer gekrümmten Profil-Preform aus flächigen Faserhalbzeugen zur Herstellung eines Faserverbundbauteils. Die Erfindung betrifft ebenso ein Verfahren zur kontinuierlichen Herstellung einer gekrümmten Profil-Preform aus flächigen Faserhalbzeugen zur Herstellung eines Faserverbundbauteils.

Aufgrund der besonders vorteilhaften Eigenschaft, bei einem relativ geringen Gewicht in zumindest einer Richtung eine sehr hohe Steifigkeit aufzuweisen, eignen sich Faserverbundbauteile für eine Vielzahl von Anwendungszwecken. Dabei werden derartige Faserverbundbauteile vermehrt auch für lasttragende Strukturen im Fahrzeug- und Flugzeugbereich eingesetzt, um bspw. durch die Reduzierung des Gesamtgewichts Treibstoff einsparen zu können. Ein Beispiel hierfür sei der Spant eines Tragflügels oder Rumpfes.

Faserverbundbauteile werden in der Regel durch Aushärtung eines in ein Faserhalbzeug infundiertes Matrixmaterial, bspw. ein Kunstharz, gebildet. Die lasttragenden Fasern des dem Faserhalbzeug zugrunde gelegten Fasermaterials, die nunmehr in das ausgehärtete Matrixmaterial eingebettet sind, verleihen dem Bauteil seine enorme Steifigkeit in Faserrichtung.

Damit das später herzustellende Faserverbundbauteil seine gewünschte Bauteilgeometrie erhält, muss das Faserhalbzeug (trocken oder vorimprägniert) in die gewünschte Bauteilform gebracht werden, bevor ein injiziertes Matrixmaterial vollständig ausgehärtet ist. Hierzu werden insbesondere bei komplexen Bauteilgeometrien zuvor sogenannte Preformen hergestellt, die die spätere Bauteilgeometrie aufweisen oder dieser zumindest sehr ähnlich sind. Nicht selten werden dabei verschiedene Preformen zu einem gesamten Bauteil zusammengesetzt. Eine solche Preform kann dann bspw. in einen Herstellungsaufbau gebracht werden, wo es mit einem Matrixmaterial injiziert und anschließend das Matrixmaterial zusammen mit dem Bauteil ausgehärtet wird.

Derartige komplexe Bauteilgeometrien stellen bspw. Profile dar, die meist eine längliche Form haben und nicht selten in den Seitenbereichen abgewinkelt sind, um so auch Lasten außerhalb der Faserrichtung ableiten zu können. Als Beispiel hierfür seien C-Profile oder Z-Profile genannt.

Gerade im Flugzeugbau ist es indes nicht selten, dass derartige Profile eine Krümmung in Längsrichtung aufweisen, um der Form des Flugzeuges zu folgen. Neben der Krümmung einer solchen Profil-Preform ist es darüber hinaus nicht selten eine Anforderung, dass die gesamte Profil-Preform eine über die Länge veränderte Steghöhe aufweist, umso bspw. Befestigungspunkte integral auszubilden.

Aus der DE 10 2012 101 706 A1 ist eine Vorrichtung und ein Verfahren zur Herstellung einer gekrümmten Preform bekannt, bei der einer der Gurte der Preform kraftschlüssig an zwei in Förderrichtung voneinander beabstandet angeordneten Walzkörper anliegt, die durch eine Umlaufgeschwindigkeitsdifferenz eine Verscherung der Fasern des Faserhalbzeugs bewirken. Denn durch eine höhere Umlaufgeschwindigkeit des in Förderrichtung später angeordneten Walzkörpers bzgl. des vorhergehenden Walzkörpers werden die Fasern des Faserhalbzeugs zwischen den beiden Walzkörpern definiert verschert, sodass sich eine vorgegebene Krümmung der Preform in Längsrichtung ergibt.

Aus der EP 2 722 145 A1 ist des Weiteren ein Verfahren und eine Vorrichtung zur Herstellung einer Preform bekannt, wobei zum Einen eine Verscherung der Fasern durch zwei gegenüberliegende Walzkörper mit unterschiedlichen Umlaufgeschwindigkeiten bewirkt wird und zum Anderen die Steghöhe variabel eingestellt werden kann, indem die beiden an unterschiedlichen Gurten des Profils vorgesehenen Walzkörper relativ zueinander bewegbar ausgeführt sind. Nachteil hierbei ist jedoch insbesondere die Tatsache, dass sowohl die Verscherung als auch die Steghöhenveränderung in einem einzigen Prozessschritt stattfindet, was sich als nachteilig in Bezug auf die Reproduzierbarkeit des Verfahrens herausgestellt hat. Darüber hinaus kann es bei einer relativen Bewegung der Rollen zueinander bei gleichzeitiger Verscherung dazu kommen, dass der Grad der Verscherung nicht mehr prozesssicher vorhergesagt werden kann. Insbesondere bei lasttragenden Strukturen sind jedoch Abweichungen von der Soll-Form nur in engen Toleranzmaßen zulässig.

Es ist daher Aufgabe der vorliegenden Erfindung eine verbesserte Anlage und ein verbessertes Verfahren zur Herstellung einer gekrümmten Profil-Preform anzugeben, mit der prozesssicher sowohl eine Krümmung in die Profil-Preform eingebracht als auch eine Steghöhe während des Herstellens der Preform verändert werden kann, und zwar derart, dass sowohl die Krümmung als auch die Steghöhenveränderung zu gleichbleibend reproduzierbaren Ergebnissen führt.

Die Aufgabe wird mit der Anlage gemäß Anspruch 1 sowie dem Verfahren gemäß Anspruch 12 erfindungsgemäß gelöst.

Gemäß Anspruch 1 wird eine Anlage zur kontinuierlichen Herstellung einer gekrümmten Profil-Preform aus flächigen Faserhalbzeugen vorgeschlagen, wobei die Anlage zunächst eine Faserbereitstellungseinrichtung hat, die zum Bereitstellen der Faserhalbzeuge ausgebildet ist. Eine derartige Faserbereitstellungseinrichtung kann bspw. eine Rolle sein, auf der das flächige Faserhalbzeug aufgewickelt ist.

Über eine Fördervorrichtung wird das bereitgestellte Faserhalbzeug einer Umformeinrichtung zugeführt, die zum Umformen des flächigen Faserhalbzeuges ausgebildet ist. Während des Umformens wird dabei aus einem ersten Seitenabschnitt des Faserhalbzeugs ein erster Gurtabschnitt und aus einem zweiten Seitenabschnitt des Faserhalbzeugs ein zweiter Gurtabschnitt gebildet, wodurch sich die gewünschte Profilform herstellen lässt. Die Umformeinrichtung ist dabei so ausgebildet, dass sie durch Abwinkeln der Seitenabschnitte des Faserhalbzeugs aus der flächigen Faserhalbzeugebene heraus die Gurtabschnitte definiert. In der Regel sind die Gurtabschnitte dabei die beiden Seitenränder des Faserhalbzeugs. Zwischen den beiden Gurtabschnitten wird hierbei ein sogenannter Stegabschnitt gebildet, der die beiden Gurtabschnitte miteinander verbindet.

Mit Hilfe einer Verschereinrichtung wird nun das Faserhalbzeug verschert, sodass sich die Krümmung der herzustellenden Profil-Preformen bilden lässt. Hierfür wird einer der Gurtabschnitte an zwei rotierende, in Förderrichtung voneinander beabstandet angeordnete Walzkörper geführt, die kraftschlüssig an dem Gurtabschnitt anliegen und aufgrund einer eingestellten Umlaufgeschwindigkeitsdifferenz eine Verscherung der Fasern des Faserhalbzeugs zwischen den beiden Walzkörpern bewirken. Mit einer Umlaufgeschwindigkeitsdifferenz ist gemeint, dass die beiden Umlaufgeschwindigkeiten des ersten und des zweiten Walzkörpers voneinander verschieden sind, insbesondere derart, dass der zweite Walzkörper, der in Förderrichtung nach dem ersten Walzkörper angeordnet ist, eine schnellere Umlaufgeschwindigkeit aufweist als der erste Walzkörper.

Mit Hilfe der Verschereinrichtung wird erreicht, dass das Faserhalbzeug insbesondere im Gurtbereich, an dem die beiden Walzkörper der Verschereinrichtung kraftschlüssig anliegen, definiert verschert wird, wobei durch Variation der Umlaufgeschwindigkeitsdifferenz die Krümmung beim kontinuierlichen Herstellen der gekrümmten Preform einstellbar ist. Zwischen den Walzkörpern wird das Fasermaterial definiert verschert und dadurch gelängt, so dass durch die Längung in einem Gurt sich eine Krümmung im Profil ergibt.

Anschließend wird das verscherte Faserhalbzeug, insbesondere die umgeformte und gekrümmte Profil-Preform, einer Querschnittsänderungseinrichtung zugeführt, die von der Verschereinrichtung verschieden ist und ebenfalls zwei rotierende Walzkörper aufweist. Die beiden Walzkörper sind dabei so angeordnet, dass sie jeweils an einem Gurtabschnitt der Profil-Preform kraftschlüssig anliegen. So kann der erste Walzkörper der Querschnittsänderungseinrichtung an dem ersten Gurtabschnitt kraftschlüssig anliegen, während der zweite Walzkörper an dem zweiten Gurtabschnitt kraftschlüssig anliegt. Mindestens einer der Walzkörper, vorzugsweise auch beide, ist so ausgebildet, dass er quer zur Förderrichtung, insbesondere senkrecht zur Förderrichtung, bewegbar ausgeführt ist, sodass aufgrund einer Bewegung quer zur Förderrichtung eines der Walzkörper die Steghöhe des zwischen den beiden Gurtabschnitten definierten Stegabschnittes kontinuierlich im Herstellungsprozess verändert werden kann.

Mit Hilfe einer Steuereinrichtung, die sowohl mit der Verschereinrichtung als auch mit der Querschnittsänderungseinrichtung verbunden ist, kann zum Einen die Umlaufgeschwindigkeitsdifferenz und zum Anderen die Bewegung quer zur Förderrichtung der Walzkörper der Querschnittsänderungseinrichtung gesteuert werden, sodass die einstellbaren Prozessparameter-Krümmung und Steghöhe, kontinuierlich während des Umformprozesses eingestellt werden können. Hierdurch lassen sich definiert und reproduzierbar verschiedene Profil-Preformen mit unterschiedlichen Krümmungsradien und verschiedenen Steghöhen in einem einzigen kontinuierlichen Herstellungsverfahren herstellen.

Durch die Trennung der Verscherung von der Querschnittsänderung wird darüber hinaus der Vorteil erreicht, dass erst nach Abschluss der definierten Verscherung zur Herstellung der Krümmung die Veränderung der Steghöhe durchgeführt wird, sodass die beiden Prozesse hinsichtlich ihrer Randparameter getrennt voneinander betrachtet werden können.

Dabei haben die Erfinder erkannt, dass trotz einer in die Profil-Preform eingebrachte Krümmung auch anschließend noch eine Veränderung der Steghöhe der gekrümmten Profil-Preform möglich ist, ohne den Krümmungsradius hierbei zu verändern und ohne die Verscherung in bestimmten Teilbereichen zu beeinflussen.

Gemäß einer vorteilhaften Ausführungsform weist mindestens einer der Walzkörper einen gegenüberliegenden, gegensinnig rotierenden Walzkörper zur Bildung eines Walzkörperpaares auf, wobei zwischen den gegensinnig rotierenden Walzkörpern des Walzkörperpaares der jeweilige Abschnitt des Faserhalbzeugs in Förderrichtung geführt wird. Durch das kraftschlüssige Anliegen des Faserhalbzeugs zwischen den beiden Walzkörpern des Walzkörperpaares kann insbesondere ein möglichst schlupfarmer Transport des Faserhalbzeugs gewährleistet werden.

Gemäß einer vorteilhaften Ausführungsform hierzu weist jeder der Walzkörper der Verschereinrichtung und der Querschnittsänderungseinrichtung einen gegenüberliegenden, gegensinnig rotierenden Walzkörper zur Bildung eines jeweiligen Walzkörperpaares auf, sodass der jeweilige Gurtabschnitt zwischen den Walzkörpern eines jeweiligen Walzkörperpaares hindurchgeführt wird.

Gemäß einer weiteren vorteilhaften Ausführungsform weist mindestens einer der Walzkörper, vorzugsweise alle Walzkörper der Verschereinrichtung und der Querschnittsänderungseinrichtung, einen ersten Walzkörperabschnitt und mindestens einen weiteren, zweiten Walzkörperabschnitt auf, wobei der erste Walzkörperabschnitt einen über die Länge gleichbleibenden Durchmesser aufweist, während der zweite Walzkörperabschnitt einen über die Länge veränderlichen Durchmesser hat. Hierdurch wird der Vorteil erreicht, dass beim Fördern des jeweiligen Gurtabschnitts an den kraftschlüssig anliegenden Walzkörper dieser den Radius der Abwinklung des Gurtabschnitts berücksichtigt und somit insbesondere bei der Steghöhenveränderung die Umformung unterstützt.

So ist es bspw. denkbar, dass bei einem Walzkörperpaar bestehend aus zwei gegensinnig rotierenden Walzkörpern der erste Walzkörper des Walzkörperpaares einen überstehenden Kragen aufweist, der einen Radius hat, der dem Radius der Abwinklung des Gurtabschnitts entspricht. Der gegenüberliegende, gegensinnig rotierende zweite Walzkörper weist hingegen eine Kappe auf, der in den Kragen des gegenüberliegenden, gegensinnig rotierenden Walzkörpers eingreift. Ein dazwischen durchgeführtes Faserhalbzeug wird somit prozesssicher hinsichtlich seiner Abwinklung gefördert.

Gemäß einer vorteilhaften Ausführungsform hierzu weist die Mantelfläche des ersten Walzkörperabschnitts einen höheren Reibungskoeffizienten als die Mantelfläche des zweiten Walzkörperabschnitts auf. So ist es bspw. denkbar, dass die Mantelfläche des ersten Walzkörperabschnitts ein Material hat, das dazu ausgebildet ist, dass das Faserhalbzeug mittels Haftreibung kraftschlüssig gefördert wird. Die Mantelfläche des zweiten Walzkörperabschnitts weist hingegen ein Material auf, bei dem das Faserhalbzeug mittels Gleitreibung geführt wird, sodass hier ein in diesem Bereich gewollter Schlupf stattfindet. Denn aufgrund des veränderlichen Durchmessers des zweiten Walzkörperabschnitts würde es in diesem Bereich zu Reibung kommen, die eine Beschädigung des Faserhalbzeugs zur Folge hätte.

So kann die Mantelfläche des ersten Walzkörperabschnitts bspw. aus einem Elastomer oder einem Gummimaterial bestehen oder ein solches aufweisen, während die Mantelfläche des zweiten Walzkörperabschnitts bspw. ein metallisches Material, wie Edelstahl oder Aluminium, aufweisen kann.

Gemäß einer weiteren vorteilhaften Ausführungsform weist die Anlage einen Faserwinkelsensor auf, der zum Ermitteln eines Faserwinkels des verscherten Faserhalbzeugs ausgebildet ist. Die Steuereinrichtung ist dann so ausgebildet, dass sie die Umlaufgeschwindigkeitsdifferenz in Abhängigkeit von dem ermittelten Faserwinkel einstellt, umso eine vorgegebene Krümmung der Profil-Preform zu bewirken. Denn anhand des ermittelten Faserwinkels lassen sich Rückschlüsse auf die Krümmung des Fasermaterials ableiten, sodass unter Kenntnis des Faserwinkels eine entsprechende Soll-Krümmung geregelt werden kann.

Ein derartiger Faserwinkelsensor kann bspw. ein optischer Sensor sein, bei dem mit Hilfe von Licht die Oberfläche des verscherten Faserhalbzeugs beleuchtet und mit Hilfe einer Kamera aufgenommen wird, wobei mittels einer Bildverarbeitungseinheit dann die einzelnen Fasern detektiert und deren Winkel bestimmt werden kann.

Vorteilhafter Weise ist der Faserwinkelsensor nach der Verschereinrichtung, besonders vorteilhafter Weise dann noch vor der Querschnittsänderungseinrichtung (in Bezug auf die Förderrichtung) angeordnet.

Der Faserwinkelsensor kann dabei gemäß einer vorteilhaften Ausführungsform so angeordnet sein, dass er den Faserwinkel der Fasern des Gurtabschnitts detektiert, an denen die Walzkörper bzw. Walzkörperpaare der Verschereinrichtung kraftschlüssig anliegen. Hierdurch lässt sich der maximale Verscherwinkel der Fasern in Bezug auf das Faserhalbzeug ermitteln.

Gemäß einer weiteren vorteilhaften Ausführungsform weist die Anlage eine Gurtbandzuführeinrichtung auf, die zum Zuführen und Einbringen zusätzlicher Gurtbänder aus Fasermaterial in mindestens einem Gurtabschnitt ausgebildet ist. Bei den zusätzlichen Gurtbändern handelt es sich insbesondere um Gurtbänder mit einer 0° Faserlage, d.h. die lasttragenden Fasern sind längs der Profil-Preform ausgerichtet. Da der Gurt bzw. die Gurte der Profil-Preform von Haus aus eine derartige 0° Faserlage der Fasern nicht mitbringt, da sie sich ansonsten nicht verscheren ließen, kann durch das Einbringen zusätzlicher Gurtbänder mit einer 0° Faserlage erreicht werden, dass die Profil-Preform und das daraus hergestellte Faserverbundbauteil auch in Längsrichtung Kräfte abtragen kann.

Gemäß einer vorteilhaften Ausführungsform hierzu ist die Gurtbandzuführeinrichtung derart ausgebildet, dass sie die zusätzlichen Gurtbänder aus Fasermaterial an einem der Walzkörper der Querschnittsänderungseinrichtung zuführt, sodass die Walzkörper der Querschnittsänderungseinrichtung auch dafür verwendet werden, die zusätzlichen Gurtbänder aus Fasermaterial in den Gurtabschnitt der Profil-Preform einzubringen. Mit Hilfe eines aktivierten Binders kann dabei das zusätzliche Gurtband lokal fixiert werden.

Gemäß einer weiteren vorteilhaften Ausführungsform kann die Gurtbandzuführeinrichtung dabei derart ausgebildet sein, dass sie eine vorgegebene Position der zusätzlichen Gurtbänder in Bezug auf die Gurthöhe des jeweiligen Gurtabschnitts einstellt, sodass verschiedene Höhen einstellbar sind. Dies ist insbesondere dann vorteilhaft, wenn mehrere Profilformen übereinander gelegt werden sollen, da sich dann in den Krümmungsradien keine örtlich wiederkehrenden Hohlräume bilden, die dann zu einer Bruchstelle im Krümmungsbereich der Gurtabschnitte führen kann.

Gemäß einer vorteilhaften Ausführungsform ist in Förderrichtung nach der Querschnittsänderungseinrichtung eine Schneideinrichtung vorgesehen, die zur Endkonturbesäumung der Gurtabschnitte der gekrümmten Profil-Preform ausgebildet ist. Mit Hilfe von bspw. fliegenden Messern kann jeder der Gurtabschnitte der Profil-Preform auf eine entsprechende Höhe endkonturbesäumt werden.

Gemäß einer weiteren vorteilhaften Ausführungsform ist mindestens einer der Walzkörper der Querschnittsänderungseinrichtung kipp- oder verschwenkbar in der Walzebene angeordnet, wobei die Walzebene durch das kraftschlüssig anliegende Faserhalbzeug und deren Faserhalbzeugebene definiert ist. Insbesondere der Walzkörper, der verschiebbar quer zur Förderrichtung ausgebildet ist, ist hierbei verschwenk- oder verkippbar ausgebildet, sodass bei einer Steghöhenveränderung der Prozess durch das Verkippen oder Verschwenken des Walzkörpers unterstützt werden kann. Denn bei einer Steghöhenveränderung muss im Gurtabschnitt das Fasermaterial eine Bewegung koaxial zu den Walzkörpern ausführen, was durch das Verschwenken oder Verkippen des jeweiligen Walzkörpers entsprechend unterstützt wird.

Gemäß einer weiteren vorteilhaften Ausführungsform ist es auch denkbar, dass bei einem Walzkörperpaar beide Walzkörper simultan verschwenk- oder verkippbar angeordnet und ausgebildet sind, um den Förderprozess nicht zu beeinträchtigen.

Gemäß einer weiteren vorteilhaften Ausführungsform ist es auch denkbar, dass mit Hilfe einer Faserhalbzeug-Erfassungseinrichtung eine Positionsinformation des Faserhalbzeugs während des Verscherens und/oder während der Querschnittsänderung erfasst wird, wobei durch ein Verschwenken oder ein Verkippen eines der Walzkörper der Verschereinrichtung und/oder der Querschnittsänderungseinrichtung eine Soll-Position beim kontinuierlichen Preformen eingeregelt wird.

Gemäß einer weiteren vorteilhaften Ausführungsform ist darüber hinaus zwischen der Faserbereitstellungseinrichtung und der Umformeinrichtung eine Vorschubeinrichtung vorgesehen, die das bereitgestellte flächige Faserhalbzeug über die gesamte Breite des Faserhalbzeugs hinweg gleichbleibend bis zur Umformeinrichtung und/oder Verschereinrichtung befördert, was insbesondere durch flächig aufliegende und über die gesamte Breite hinweg vorgesehene Walzen ermöglicht wird. Durch eine derartige Vorschubeinrichtung wird erreicht, dass bis zur Umformeinrichtung bzw. bis zur Verschereinrichtung ein stets gleichbleibender Faserwinkel vorliegt, sodass die Verscherung mit reproduzierbar und definierten Randbedingungen starten kann.

Die Erfindung wird anhand der beigefügten Figuren beispielhaft näher erläutert. Es zeigen:
- Figur 1: schematische Darstellung der erfindungsgemäßen Anlage;
- Figur 2: schematische Darstellung eines Walzkörperpaares;
- Figur 3: perspektivische Darstellung eines Preformprofils.

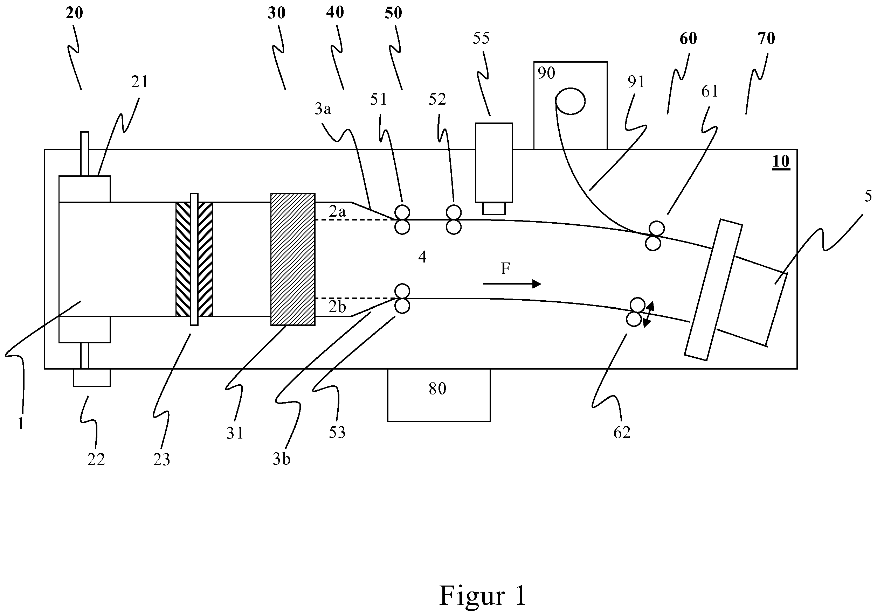

Figur 1 zeigt schematisch die erfindungsgemäße Anlage zur Herstellung einer gekrümmten Profil-Preform. Die Profil-Preform weist dabei ein Fasermaterial auf oder besteht aus diesem, das zur Herstellung von Faserverbundbauteilen verwendet wird, indem das Fasermaterial mit einem Matrixmaterial infundiert und anschließend das Matrixmaterial ausgehärtet wird. Die gekrümmte Profil-Preform weist dabei im Querschnitt jeweils Gurtabschnitte auf, die von einem mittleren Stegabschnitt abgewinkelt sind. In Längsrichtung soll dabei eine Krümmung in die Preform eingebracht werden. Derartige Profile können bspw. C- oder Z-Profile sein.

Die erfindungsgemäße Anlage 10 zur Herstellung einer solchen gekrümmten Profil-Preform aus flächigen Faserhalbzeugen hat eine Faserbereitstellungseinrichtung 20, die eine Rolle 21 aufweist, auf der das flächige Faserhalbzeug 1 der Anlage 10 bereitgestellt wird.

Die Rolle 21 ist über einen Motor 22 drehbar angetrieben, sodass das flächige Faserhalbzeug 1 möglichst zugfrei den einzelnen weiteren Stationen der Anlage 10 zugeführt wird. Um Schwankungen in der Zuführgeschwindigkeit ausgleichen zu können, ist der Rolle 21 in Förderrichtung F nachfolgend eine Tänzerrolle 23 angeordnet, die über einen Hubausgleich die Zuführung vergleichmäßigt und synchronisiert. Die Tänzerrolle 23 kann dabei über ein Sensorsystem detektiert werden, sodass je nach detektierten Hub der Motor 22 der Faserbereitstellungseinrichtung 20 angesteuert werden kann.

Auf diese Art wird das flächige Faserhalbzeug 1 der Vorschubeinrichtung 30 bereitgestellt. Die Vorschubeinrichtung 30 weist eine über die gesamte Breite des flächigen Faserhalbzeugs 1 hinweg erstreckende Vorschubwalze 31 auf, die das flächige Faserhalbzeug über die gesamte Breite hinweg gleichbleibend und gleichmäßig der Umformeinrichtung 40 zuführt. Mit der über die gesamte Breite des flächigen Faserhalbzeugs 1 hinweg erstreckende Vorschubwalze 31 wird dabei erreicht, dass die Zuführung des flächigen Faserhalbzeugs 1 zu der Umformeinrichtung 40 stets mit dem über die gesamte Breite des flächigen Faserhalbzeugs hinweg gleichbleibenden Faserwinkel erfolgt, sodass sowohl die Umformung als auch die danach folgende Verscherung von konstanten Randbedingungen bzgl. des Faserwinkels ausgehen kann.

Mittels der Umformeinrichtung 40 werden die Seitenabschnitte 2a, 2b des flächigen Faserhalbzeugs 1 abgewinkelt, sodass entsprechende Gurtabschnitte 3a, 3b gebildet werden. Das Umformen erfolgt dabei mittels der Umformeinrichtung 40 derart, dass die Seitenabschnitte 2a, 2b von dem flächigen Faserhalbzeug 1 abgewinkelt werden, sodass zwischen den gebildeten Gurtabschnitten 3a, 3b ein Stegabschnitt 4 definiert wird. Das Umformen kann dabei mittels Rollen oder Führungsschienen oder dergleichen erfolgen.

Das so umgeformte Faserhalbzeug 1 wird nun der nachgelagerten Verschereinrichtung 50 zugeführt, die zwei in Förderrichtung F beabstandet voneinander angeordnete Walzkörperpaare 51 und 52 aufweist. Zwischen den Walzkörpern der Walzkörperpaare wird dabei der jeweilige Gurtabschnitt, im Ausführungsbeispiel der Figur 1 der Gurtabschnitt 3a, hindurchgeführt, wobei der Gurtabschnitt 3a kraftschlüssig an den Walzkörpern der beiden Walzkörperpaare 51 und 52 anliegt.

Die Walzkörper der beiden Walzkörperpaare 51 und 52 rotieren dabei mit unterschiedlichen Umlaufgeschwindigkeiten, sodass sich zwischen den Walzkörpern des Walzkörperpaares 51 und der Walzkörper des Walzkörperpaares 52 eine Umlaufgeschwindigkeitsdifferenz einstellt, die zu einer Verscherung der Fasern des Faserhalbzeugs 1 zwischen den Walzkörperpaaren 51 und 52 führt. Die Verscherung ist dabei in dem Gurtabschnitt 3a, an dem die Walzkörperpaare 51 und 52 kraftschlüssig anliegen, am größten und erstreckt sich gleichmäßig kleiner werdend hinüber zum Gurtabschnitt 3b, wo die Verscherung am geringsten ist bzw. gar nicht mehr auftritt.

Am gegenüberliegenden Gurtabschnitt 3b kann darüber hinaus mindestens ein weiteres Walzkörperpaar 53 angeordnet sein, das kraftschlüssig an dem zweiten Gurtabschnitt 3b anliegt und vorteilhafter Weise die Umlaufgeschwindigkeit des ersten Walzkörperpaares 51 des ersten Gurtabschnitts 3a hat.

Durch die Verscherung des Fasermaterials zwischen den beiden Walzkörpern 51 und 52 wird in das Faserhalbzeug 1 eine definierte Krümmung in Längsrichtung eingebracht, die letztlich von der Umlaufgeschwindigkeitsdifferenz der beiden Walzkörperpaare 51 und 52 abhängt.

Das so verscherte Faserhalbzeug wird nun einer Querschnittsänderungseinrichtung zugeführt, die in Förderrichtung F der Verschereinrichtung 50 nachgelagert ist. Die Querschnittsänderungseinrichtung 60 weist mindestens zwei Walzkörperpaare 61 und 62 auf, wobei das erste Walzkörperpaare 61 mit seinen Walzkörpern kraftschlüssig an dem ersten Gurtabschnitt 3a anliegt, während das zweite Walzkörperpaar 62 mit seinen Walzkörpern kraftschlüssig an dem zweiten Gurtabschnitt 3b anliegt. Mindestens das Walzkörperpaar 62 ist dabei quer zur Förderrichtung F verschiebbar angeordnet, sodass die Distanz zwischen dem Walzkörperpaar 61 und dem Walzkörperpaar 62 verändert werden kann. Genauer gesagt, das Walzkörperpaar 62 ist im Ausführungsbeispiel der Figur 1 so ausgebildet, dass es sich von dem Stegabschnitt 4 des Faserhalbzeugs 1 weg bewegen oder auf dieses zu bewegen kann. Hierdurch wird erreicht, dass die Steghöhe des Stegabschnitts 4 verändert werden kann, um so gekrümmte Profil-Preformen mit variierender Steghöhe herstellen zu können. Die Steghöhe ist dabei definiert als die Ausdehnung zwischen dem ersten Gurtabschnitt 3a und dem zweiten Gurtabschnitt 3b.

Anschließend wird die gekrümmte Profil-Preform einer Schneideinrichtung 70 zugeführt, welche die Gurtabschnitte 3a, 3b endkonturbesäumt, sodass sie im Wesentlichen die gleiche oder eine definiert unterschiedliche Gurthöhe aufweisen.

Die gesamte Anlage 10 wird mit Hilfe einer Steuereinrichtung 80 gesteuert, wobei die Steuereinrichtung 80 insbesondere mit der Verschereinrichtung 50 der Querschnittsänderungseinrichtung 60 verbunden ist und eingerichtet ist, zum Einen die Umlaufgeschwindigkeitsdifferenz zwischen den beiden Walzkörperpaaren 51 und 52 gemäß einer vorgegebenen Soll-Krümmung einzustellen und darüber hinaus die Bewegung des mindestens einen Walzkörperpaares 62 der Querschnittsänderungseinrichtung 60 anzusteuern, umso die gewünschte Soll-Steghöhe des Stegabschnitts 4 einzustellen.

Die Anlage 10 kann einen Faserwinkelsensor 55 aufweisen, der den beiden Walzkörperpaaren 51 und 52 nachgeschaltet ist und einen Faserwinkel der verscherten Fasern im ersten Gurtabschnitt 3a detektiert. Anhand des so ermittelten Faserwinkels der verscherten Fasern kann dann die Steuereinrichtung 80 die Umlaufgeschwindigkeitsdifferenz zwischen den beiden Walzkörperpaaren 51 und 52 so einstellen, dass die gewünschte Krümmung herstellen lässt. Denn die Krümmung der Preform ist direkt abhängig von dem Faserwinkel der verscherten Fasern.

Des Weiteren kann eine Gurtbandzuführeinrichtung 90 vorgesehen sein, die ein zusätzliches Gurtband aus Fasermaterial mit einer Nullgradlage der Verstärkungsfasern in den Außengurt 3a (erster Gurtabschnitt) über das Walzkörperpaar 61 der Querschnittsänderungseinrichtung 60 einbringt. Dabei kann durch Einbringen von Wärme bspw. ein Bindermaterial aktiviert werden, sodass sich das zusätzliche Gurtband 91 außen an den ersten Gurtabschnitt 3a fixiert.

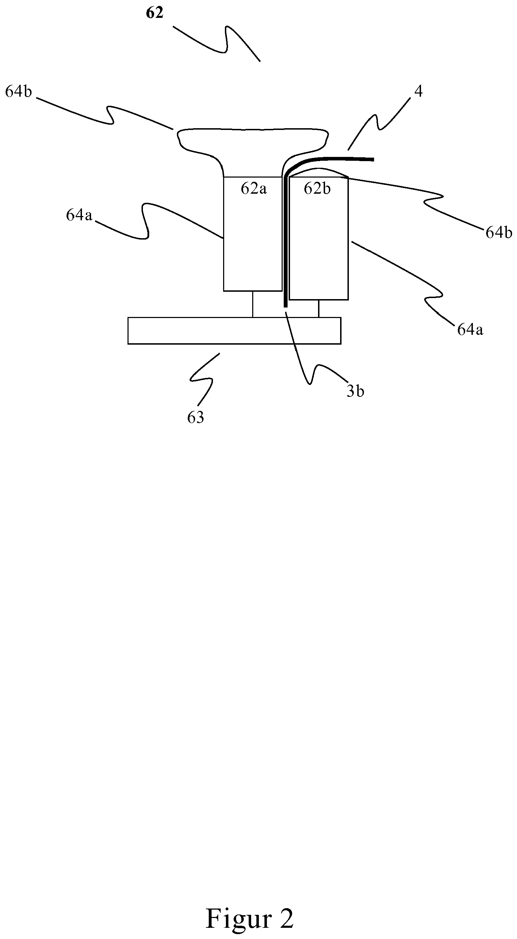

Figur 2 zeigt schematisch das Walzkörperpaar 62, das Bestandteil der Querschnittsänderungseinrichtung 60 ist und darüber hinaus durch eine lineare Verschiebung zur Variation der Steghöhe vorgesehen ist. Das Walzkörperpaar 62 weist zwei gegensinnig rotierende Walzkörper 62a und 62b auf, wobei zwischen den Walzkörpern 62a und 62b der zweite Gurtabschnitt 3b kraftschlüssig an den Walzkörpern anliegt. Mit Hilfe eines Linearmotors 63 lassen sich die beiden Walzkörper 62a und 62b quer zur Förderrichtung des Faserhalbzeugs verschieben.

So führt eine Verschiebung des Walzkörperpaares 62 nach links dazu, dass die Höhe des Gurtabschnitts 3b verkleinert wird und das Faserhalbzeug bzgl. der Walzkörper 62a und 62b nach oben rutscht. Die Steghöhe wird in diesem Fall vergrößert. Bei einem Verschieben nach rechts rutscht das Faserhalbzeug nach unten, wodurch der Gurtabschnitt 3b vergrößert wird und die Steghöhe verkleinert.

Die beiden Walzkörper 62a und 62b weisen einen ersten Walzkörperabschnitt 64a und einen zweiten Walzkörperabschnitt 64b auf. Der erste Walzkörperabschnitt 64a weist dabei einen im Wesentlichen gleichbleibenden, über die Länge des Walzkörperabschnitts 64a hinweg konstanten Durchmesser auf, sodass der Walzkörperabschnitt 64a des Walzkörpers 62a eine zylindrische Form mit konstantem Querschnitt hat. Am oberen Ende des Walzkörpers 62a befindet sich der zweite Walzkörperabschnitt 64b, der einen veränderlichen Durchmesser aufweist, wodurch beim Walzkörper 62a eine Art Kragen entsteht. Korrespondieren hierzu wird beim Walzkörper 62b im Bereich des zweiten Walzkörperabschnitts 64b eine Art Kappe geformt.

Durch den veränderlichen Durchmesser dieses zweiten Walzkörperabschnitts 64b wird der Krümmungsradius des Halbzeugs nachgeformt, der den Übergang vom Stegabschnitt 4 hin zu Gurtabschnitt 3b definiert. Hierdurch wird zum einen der Umformprozess als solcher weiter unterstützt und darüber hinaus verhindert, dass das Fasermaterial aufgrund eines zu engen Krümmungsradius bricht.

Der erste Walzkörperabschnitt 64a mit dem konstanten Durchmesser weist dabei eine Mantelfläche auf, die einen sehr hohen Reibungskoeffizienten hat, wodurch der Gurtabschnitt 3b möglichst schlupffrei bzw. schlupfarm durch die beiden Walzkörper 62a und 62b hinweg geführt werden kann. Ein solches Material kann bspw. Gummi sein. Der zweite Walzkörperabschnitt 64b mit dem veränderlichen Durchmesser weist hingegen eine Mantelfläche auf, die einen sehr geringen Reibungskoeffizienten hat, um so ein Führen des Faserhalbzeugs mittels Gleitreibung in diesem Bereich zu ermöglichen. Eine solche Mantelfläche kann bspw. aus Edelstahl bestehen.

Um den Prozess der Steghöhenvariation zu unterstützen, ist es vorteilhaft, wenn das Walzkörperpaar 62 bei der linearen Verschiebung quer zur Förderrichtung gleichzeitig in Förderrichtung oder entgegengesetzt zur Förderrichtung verkippt oder verschwenkt wird (im Ausführungsbeispiel der Figur 2 aus der Darstellungsebene heraus), um so den senkrecht gerichteten Transport des Gurtabschnitts 3b zwischen den beiden Walzkörpern 62a und 62b zu unterstützen.

Denkbar ist allerdings auch, dass andere Walzkörperpaare der Anlage 10 verkippt oder verschwenkbar ausgeführt sind, und zwar in der entsprechenden Faserhalbzeugebene des anliegenden Faserhalbzeugteils, um so eine höhengeregelte Führung der Preform entlang der Walzkörperpaare zu ermöglichen. Hierfür ist es denkbar, dass mittels eines Sensors, beispielsweise eines Laserlichtschnittsensors, die Position der Preform erfasst und dann in Abhängigkeit der Position der Preform die Walzkörperpaare zum Verschwenken oder Verkippen so angesteuert werden, dass eine vorgegebene Soll-Position der Preform während des kontinuierlichen Preformens geregelt wird.

Der grundsätzliche Aufbau eines Walzkörperpaares, sowie in Figur 2 gezeigt ist, lässt sich dabei auch auf sämtliche andere Walzkörperpaare der Anlage 10 übertragen, sodass auch die Walzkörperpaare 51, 52, 53 sowie 61 nach dem gleichen Prinzip dargestellt in Figur 2 aufgebaut sind.

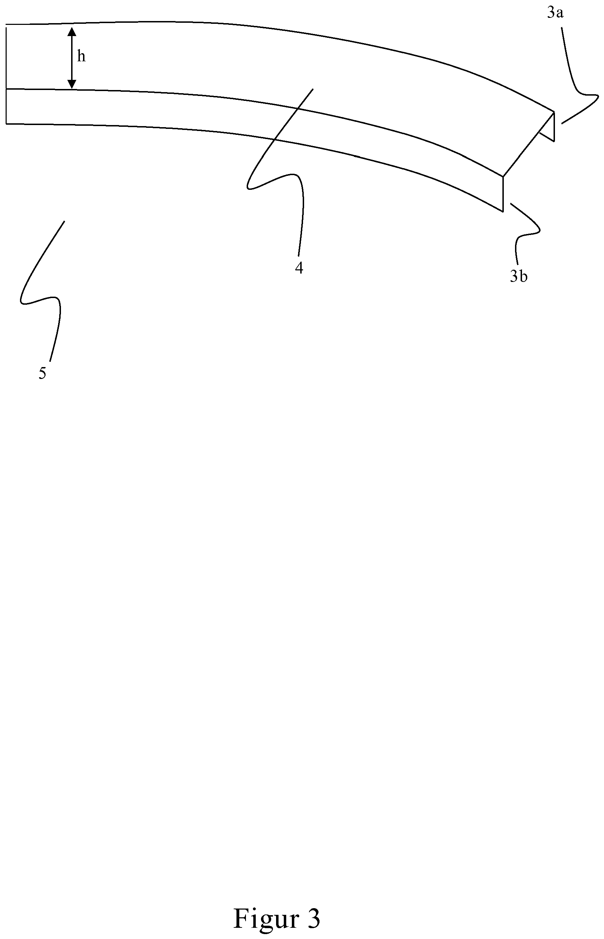

Figur 3 zeigt schematisch die fertig hergestellte gekrümmte Profil-Preform 5, die einen ersten Gurtabschnitt 3a als Außengurt, einen zweiten Gurtabschnitt 3b als Innengurt sowie einen dazwischen liegenden Stegabschnitt 4 hat, wobei die Steghöhe h von links nach rechts zunimmt. Eine derartig gekrümmte Profil-Preform mit komplexem Querschnitt über die gesamte Länge hinweg ist mit der erfindungsgemäßen Anlage sowie dem erfindungsgemäßen Verfahren prozesssicher herstellbar.

### Bezugszeichenliste

- 1: flächiges Faserhalbzeug
- 2a: erster Seitenabschnitt
- 2b: zweiter Seitenabschnitt
- 3a: erster Gurtabschnitt
- 3b: zweiter Gurtabschnitt
- 4: Stegabschnitt
- 5: gekrümmte Profil-Preform
- 10: Anlage
- 20: Faserbereitstellungseinrichtung
- 21: Faserhalbzeugrolle
- 22: Antrieb der Faserbereitstellungseinrichtung
- 23: Tänzerrolle
- 30: Vorschubeinrichtung
- 31: Vorschubwalze
- 40: Umformeinrichtung
- 50: Verschereinrichtung
- 51: erstes Walzkörperpaar
- 52: zweites Walzkörperpaar
- 53: zusätzliches Walzkörperpaar
- 55: Faserwinkelsensor
- 60: Querschnittsänderungseinrichtung
- 61: erstes Walzkörperpaar
- 62: linear verschiebbares zweites Walzkörperpaar
- 70: Schneideinrichtung
- 80: Steuereinrichtung
- 90: Gurtbandzuführeinrichtung
- 91: zusätzliche Gurtbänder
- 62a, 62b: Walzkörper des linear verschiebbaren zweiten Walzkörperpaares 62
- 64a: erster Walzkörperabschnitt
- 64b: zweiter Walzkörperabschnitt

## Patentansprüche

1. Anlage (10) zur kontinuierlichen Herstellung einer gekrümmten Profil-Preform (5) aus flächigen Faserhalbzeugen (1) zur Herstellung eines Faserverbundbauteils, mit
- einer Faserbereitstellungseinrichtung (20), die zum Bereitstellen der Faserhalbzeuge (1) ausgebildet ist,
- einer Umformeinrichtung (40), die zum Bilden eines ersten Gurtabschnittes (3a) aus einem ersten Seitenabschnitt (2a) des Faserhalbzeuges (1) und zum Bilden eines zweiten Gurtabschnittes (3b) aus einem zweiten Seitenabschnitt (2b) ausgebildet ist,
- einer Verschereinrichtung (50), die mindestens zwei rotierende, in eine Förderrichtung voneinander beabstandet angeordnete Walzkörper (51, 52) hat, die ausgebildet sind, an einem der Gurtabschnitte (3a, 3b) kraftschlüssig anzuliegen und mit diesem derart zusammenzuwirken, dass durch eine eingestellte Umlaufgeschwindigkeitsdifferenz zwischen den Walzkörpern eine Verscherung der Fasern zwischen den Walzkörpern zur Bildung der Krümmung der herzustellenden Profil-Preform (5) bewirkt wird,
- einer Querschnittsänderungseinrichtung (60), die von der Verschereinrichtung (50) verschieden ist und die einen ersten rotierenden Walzkörper hat, der an dem ersten Gurtabschnitt (3a) kraftschlüssig anliegt, und die einen zweiten rotierenden Walzkörper hat, der an dem zweiten Gurtabschnitt (3b) kraftschlüssig anliegt, wobei mindestens einer der Walzkörper quer zur Förderrichtung bewegbar angeordnet ist und mit dem jeweiligen Gurtabschnitt (3a, 3b) derart zusammenwirkt, dass durch eine Bewegung des Walzkörpers quer zur Förderrichtung eine Steghöhenveränderung eines zwischen den Gurtabschnitten (3a, 3b) definierten Stegabschnittes (4) während der Herstellung der gekrümmten Profil-Preform (5) bewirkt wird, und
- einer Steuereinrichtung (80), die zum Ansteuern der Verschereinrichtung (50) zum Einstellen der Umlaufgeschwindigkeitsdifferenz und zum Ansteuern der Querschnittsänderungseinrichtung (60) zum Einstellen der Steghöhe des Stegabschnitts (4) eingerichtet ist.

2. Anlage nach Anspruch 1, **dadurch gekennzeichnet, dass** bei mindestens einem Walzkörper ein gegenüberliegender, gegensinnig rotierender Walzkörper zur Bildung eines Walzkörperpaares (51, 52, 61, 62) angeordnet ist, wobei zwischen den gegensinnig rotierenden Walzkörpern des Walzkörperpaares (51, 52, 61, 62) der jeweilige Abschnitt des Faserhalbzeuges in Förderrichtung geführt wird.

3. Anlage nach Anspruch 2, **dadurch gekennzeichnet, dass** jeder Walzkörper der Verschereinrichtung (50) und der Querschnittsänderungseinrichtung (60) einen gegenüberliegenden, gegensinnig rotierenden Walzkörper zur Bildung eines jeweiligen Walzkörperpaares (51, 52, 61, 62) hat.

4. Anlage nach einem der vorhergehenden Ansprüche, **dadurch gekennzeichnet, dass** mindestens einer der Walzkörper einen ersten Walzkörperabschnitt (64a) und mindestens einen zweiten Walzkörperabschnitt (64b) hat, wobei der erste Walzkörperabschnitt (64a) einen über die Länge gleichbleibenden Durchmesser aufweist, während der zweiten Walzkörperabschnitt (64b) einen über die Länge veränderlichen Durchmesser aufweist.

5. Anlage nach Anspruch 4, **dadurch gekennzeichnet, dass** die Mantelfläche des ersten Walzkörperabschnittes (64a) einen höheren Reibungskoeffizienten als die Mantelfläche des zweiten Walzkörperabschnittes (64b) hat.

6. Anlage nach einem der vorhergehenden Ansprüche, **dadurch gekennzeichnet, dass** ein Faserwinkelsensor (55) vorgesehen ist, der zum Ermitteln eines Faserwinkels des verscherten Faserhalbzeuges (1) ausgebildet ist, wobei die Steuereinrichtung (80) zum Einstellen der Umlaufgeschwindigkeitsdifferenz in Abhängigkeit von dem ermittelten Faserwinkel eingerichtet ist, um eine vorgegebene Krümmung der Profil-Preform (5) zu bewirken.

7. Anlage nach einem der vorhergehenden Ansprüche, **dadurch gekennzeichnet, dass** eine Gurtbandzuführeinrichtung (90) vorgesehen ist, die zum Zuführen und Einbringen zusätzlicher Gurtbänder (91) aus Fasermaterial in mindestens einen Gurtabschnitt (3a, 3b) ausgebildet ist.

8. Anlage nach Anspruch 7, **dadurch gekennzeichnet, dass** die Gurtbandzuführeinrichtung (90) die zusätzlichen Gurtbänder (91) an den ersten und/oder zweiten Walzkörper der Querschnittsänderungseinrichtung (60) zuführt und die zusätzlichen Gurtbänder (91) über den ersten und/oder zweiten Walzkörper der Querschnittsänderungseinrichtung (60) in den jeweiligen Gurtabschnitt (3a, 3b) einbringt.

9. Anlage nach Anspruch 7 oder 8, **dadurch gekennzeichnet, dass** die Gurtbandzuführeinrichtung (90) zum Einstellen einer vorgegebenen Position der zusätzlichen Gurtbänder (91) in Bezug auf die Gurthöhe des jeweiligen Gurtabschnittes (3a, 3b) ausgebildet ist.

10. Anlage nach einem der vorhergehenden Ansprüche, **dadurch gekennzeichnet, dass** eine Schneideinrichtung (70) vorgesehen ist, die zur Endkonturbesäumung der Gurtabschnitte (3a, 3b) der gekrümmten Profil-Preform (5) ausgebildet ist.

11. Anlage nach einem der vorhergehenden Ansprüche, **dadurch gekennzeichnet, dass** mindestens einer der Walzkörper der Querschnittsänderungseinrichtung (60) in einer durch das kraftschlüssig anliegende Faserhalbzeug (1) definierten Faserhalbzeugebene verschwenk- oder verkippbar während des Verschiebens quer zur Förderrichtung ausgebildet ist.

12. Verfahren zur kontinuierlichen Herstellung einer gekrümmten Profil-Preform (5) aus flächigen Faserhalbzeugen (1) zur Herstellung eines Faserverbundbauteils, mit den Schritten:
- Bereitstellen eines flächigen Faserhalbzeuges (1);
- Umformen des flächigen Faserhalbzeuges (1), sodass aus einem ersten Seitenabschnittes (2a) des Faserhalbzeuges (1) ein erster Gurtabschnitt (3a) und aus einem zweiten Seitenabschnitt (2b) des Faserhalbzeuges (1) ein zweiter Gurtabschnitt (3b) gebildet wird,
- Verscheren des Faserhalbzeuges (1), indem zwei rotierende, in eine Förderrichtung voneinander beabstandet angeordnete Walzkörper (51, 52) kraftschlüssig an einem der Gurtabschnitte (3a, 3b) anliegen und eine Umlaufgeschwindigkeitsdifferenz zwischen den beiden Walzkörpern eingestellt wird, sodass eine Verscherung der Fasern zwischen den Walzkörpern zur Bildung der Krümmung der herzustellenden Profil-Preform (5) bewirkt wird, und anschließend
- Verändern einer Steghöhe eines zwischen den Gurtabschnitten (3a, 3b) definierten Stegabschnittes (4), indem zwei Walzkörper jeweils an einem Gurtabschnitt (3a, 3b) kraftschlüssig anliegen und mindestens einer der Walzkörper quer zur Förderrichtung bewegt wird, sodass eine vorgegebene Steghöhe eingestellt wird.

13. Verfahren nach Anspruch 12, **dadurch gekennzeichnet, dass** mittels eines Faserwinkelsensors (55) der Faserwinkel des verscherten Faserhalbzeuges (1) ermittelt wird, wobei die Umlaufgeschwindigkeitsdifferenz während der Verscherung der Fasern in Abhängigkeit von dem ermittelten Faserwinkel eingestellt wird, um eine vorgegebene Krümmung der Profil-Preform (5) zu bewirken.

14. Verfahren nach Anspruch 12 oder 13, **dadurch gekennzeichnet, dass** zusätzliche Gurtbänder (91) aus Fasermaterial in mindestens einen Gurtabschnitt (3a, 3b) eingebracht werden.

15. Verfahren nach Anspruch 14, **dadurch gekennzeichnet, dass** eine vorgegebene Position der zusätzlichen Gurtbänder (91) in Bezug auf die Gurthöhe des jeweiligen Gurtabschnittes (3a, 3b) eingestellt wird.

16. Verfahren nach einem der Ansprüche 12 bis 15, **dadurch gekennzeichnet, dass** mittels einer Schneidvorrichtung (70) eine Endkonturbesäumung der Gurtabschnitte (3a, 3b) durchgeführt wird.

17. Verfahren nach einem der Ansprüche 12 bis 16, **dadurch gekennzeichnet, dass** während der Veränderung der Stegöhe durch Bewegen mindestens eines der Walzkörper quer zur Förderrichtung der Walzkörper in einer durch das kraftschlüssig anliegende Faserhalbzeug (1) definierten Faserhalbzeugebene verschwenkt oder verkippt wird.

## Claims

1. A system (10) for the continuous production of a curved profiled preform (5) from planar semi-finished fibrous products (1), for the production of a fiber-composite component, said system (10) having
- a fiber supply installation (20) which is configured for providing the semi-finished fibrous products (1);
- a forming installation (40) which is configured for forming a first belt portion (3a) from a first lateral portion (2a) of the semi-finished fibrous product (1) and for forming a second belt portion (3b) from a second lateral portion (2b);
- a shearing installation (50) which has at least two rotating roller elements (51, 52) that are disposed so as to be mutually spaced apart in a conveying direction and are configured so as to bear in a force-fitting manner on one of the belt portions (3a, 3b) and to interact with the latter in such a manner that shearing of the fibers between the roller elements in order for the curvature of the profiled preform (5) to be formed is caused by a rotational speed differential set between the roller elements;
- a cross-sectional modification installation (60) which is different from the shearing installation (50) and which has a first rotating roller element which bears in a force-fitting manner on the first belt portion (3a) and has a second rotating roller element which bears in a force-fitting manner on the second belt portion (3b), wherein at least one of the roller elements is disposed so as to be transverse to the conveying direction and interacts with the respective belt portion (3a, 3b) in such a manner that a web height modification of a web portion (4) that is defined between the belt portions (3a, 3b) is caused during the production of the curved profiled preform (5) by a movement of the roller element that is transverse to the conveying direction; and
- a controller installation (80) which is adapted for actuating the shearing installation (50) in order for the rotational speed differential to be set and for actuating the cross-sectional modification installation (60) in order for the web height of the web portion (4) to be set.

2. The system as claimed in claim 1, **characterized in that**, in order for a roller element pair (51, 52, 61, 62) to be formed, a counter-rotating roller element is disposed so as to be opposite at least one roller element, wherein the respective portion of the semi-finished fibrous product is conveyed in a conveying direction between the counter-rotating roller elements of the roller element pair (51, 52, 61, 62).

3. The system as claimed in claim 2, **characterized in that**, in order for a respective roller element pair (51, 52, 61, 62) to be formed, each roller element of the shearing installation (50) and of the cross-sectional modification installation (60) has one opposite counter-rotating roller element.

4. The system as claimed in one of the preceding claims, **characterized in that** at least one of the roller elements has a first roller element portion (64a) and at least one second roller element portion (64b), wherein the first roller element portion (64a) has a diameter that is consistent across the length, while the second roller element portion (64b) has a diameter that is variable across the length.

5. The system as claimed in claim 4, **characterized in that** the sleeve area of the first roller element portion (64a) has a coefficient of friction that is higher than that of the sleeve area of the second roller element portion (64b).

6. The system as claimed in one of the preceding claims, **characterized in that** a fiber angle sensor (55) which is configured for determining a fiber angle of the sheared semi-finished fibrous product (1) is provided, wherein the controller installation (80) is adapted for setting the rotational speed differential so as to depend on the fiber angle determined, so as to cause a predefined curvature of the profiled preform (5).

7. The system as claimed in one of the preceding claims, **characterized in that** a belt webbing infeed installation (90) which is configured for infeeding and incorporating additional belt webbings (91) from fibrous material into at least one belt portion (3a, 3b) is provided.

8. The system as claimed in claim 7, **characterized in that** the belt webbing infeed installation (90) infeeds the additional belt webbings (91) at the first and/or the second roller element of the cross-sectional modification installation (60), and incorporates the additional belt webbings (91) into the respective belt portion (3a, 3b) by way of the first and/or the second roller element of the cross-sectional modification installation (60).

9. The system as claimed in claim 7 or 8, **characterized in that** the belt webbing infeed installation (90) is configured for setting a predefined position of the additional belt webbings (91) in relation to the belt height of the respective belt portion (3a, 3b).

10. The system as claimed in one of the preceding claims, **characterized in that** a cutting installation (70) which is configured for trimming the end contour of the belt portions (3a, 3b) of the curved profiled preform (5) is provided.

11. The system as claimed in one of the preceding claims, **characterized in that** at least one of the roller elements of the cross-sectional modification installation (60), while being displaced transversely to the conveying direction, is configured so as to be pivotable or tiltable in a semi-finished fibrous product plane that is defined by the semi-finished fibrous product (1) bearing in a force-fitting manner on said roller element.

12. A method for the continuous production of a curved profiled preform (5) from planar semi-finished fibrous products (1), for the production of a fiber-composite component, said method comprising the following steps:
- providing a planar semi-finished fibrous product (1) ;
- forming the planar semi-finished fibrous product (1) such that a first belt portion (3a) is formed from a first lateral portion (2a) of the semi-finished fibrous product (1), and a second belt portion (3b) is formed from a second lateral portion (2b) of the semi-finished fibrous product (1) ;
- shearing the semi-finished fibrous product (1) in that two rotating roller elements (51, 52) that are disposed so as to be mutually spaced apart in a conveying direction bear in a force-fitting manner on one of the belt portions (3a, 3b), and a rotational speed differential between the two roller elements is set such that shearing of the fibers between the roller elements in order for the curvature of the profiled preform (5) to be produced is caused; and subsequently
- modifying a web height of a web portion (4) that is defined between the belt portions (3a, 3b), in that two roller elements in each case bear in a force-fitting manner on one belt portion (3a, 3b), and at least one of the roller elements is moved transversely to the conveying direction such that a predefined web height is set.

13. The method as claimed in claim 12, **characterized in that** the fiber angle of the sheared semi-finished fibrous product (1) is determined by means of a fiber angle sensor (55), wherein the rotational speed differential during the shearing of the fibers is set so as to depend on the determined fiber angle, in order to cause a predetermined curvature of the profiled preform (5).

14. The method as claimed in claim 12 or 13, **characterized in that** additional belt webbings (91) from fibrous material are incorporated into at least one belt portion (3a, 3b).

15. The method as claimed in claim 14, **characterized in that** a predefined position of the additional belt webbings (91) in relation to the belt height of the respective belt portion (3a, 3b) is set.

16. The method as claimed in one of claims 12 to 15, **characterized in that** trimming of the end contour of the belt portions (3a, 3b) is carried out by means of a cutting device (70).

17. The method as claimed in one of claims 12 to 16, **characterized in that** during the modification of the web height at least one of the roller elements, while being displaced transversely to the conveying direction of the roller elements, is pivoted or tilted in a semi-finished fibrous product plane that is defined by the semi-finished fibrous product (1) bearing in a force-fitting manner on said roller element.

## Revendications

1. Installation (10) pour la fabrication en continu d'une préforme profilée courbée (5) constituée de produits semi-finis fibreux plats (1) pour la fabrication d'un composant composite renforcé par des fibres, comprenant
- un dispositif de fourniture de fibres (20) qui est réalisé pour fournir les produits semi-finis fibreux (1),
- un dispositif de formage (40) qui est réalisé pour former une première portion de sangle (3a) à partir d'une première portion latérale (2a) du produit semi-fini fibreux (1) et pour former une deuxième portion de sangle (3b) à partir d'une deuxième portion latérale (2b),
- un dispositif de cisaillement (50) qui présente au moins deux corps de roulement (51, 52) rotatifs, disposés à distance l'un de l'autre dans la direction de transport, qui sont réalisés de manière à s'appliquer par engagement par force contre l'une des portions de sangle (3a, 3b) et pour coopérer avec celle-ci de telle sorte qu'un cisaillement des fibres soit provoqué entre les corps de roulement par une différence de vitesse périphérique ajustée entre les corps de roulement, pour former la courbure de la préforme profilée à fabriquer (5),
- un dispositif de variation de section transversale (60) qui est différent du dispositif de cisaillement (50) et qui présente un premier corps de roulement rotatif qui s'applique par engagement par force contre la première portion de sangle (3a) et qui présente un deuxième corps de roulement rotatif qui s'applique par engagement par force contre la deuxième portion de sangle (3b), au moins l'un des corps de roulement étant disposé de manière déplaçable transversalement à la direction de transport et coopérant avec la portion de sangle respective (3a, 3b) de telle sorte qu'une variation de hauteur de nervure d'une portion de nervure (4) définie entre les portions de sangle (3a, 3b) soit provoquée par un déplacement du corps de roulement transversalement à la direction de transport pendant la fabrication de la préforme profilée courbée (5), et
- un dispositif de commande (80) qui est prévu pour commander le dispositif de cisaillement (50) pour ajuster la différence de vitesse de rotation et pour commander le dispositif de variation de section transversale (60) pour ajuster la hauteur de nervure de la portion de nervure (4).

2. Installation selon la revendication 1, **caractérisée en ce que** dans le cas d'au moins un corps de roulement, il est prévu un corps de roulement opposé tournant en sens inverse pour la formation d'une paire de corps de roulement (51, 52, 61, 62), la portion respective du produit semi-fini fibreux étant guidée dans la direction de transport entre les corps de roulement tournant en sens inverse de la paire de corps de roulement (51, 52, 61, 62).

3. Installation selon la revendication 2, **caractérisée en ce que** chaque corps de roulement du dispositif de cisaillement (50) et du dispositif de variation de section transversale (60) présente un corps de roulement opposé tournant en sens inverse pour former une paire de corps de roulement respective (51, 52, 61, 62).

4. Installation selon l'une quelconque des revendications précédentes, **caractérisée en ce qu'**au moins l'un des corps de roulement présente une première portion de corps de roulement (64a) et au moins une deuxième portion de corps de roulement (64b), la première portion de corps de roulement (64a) présentant un diamètre constant sur la longueur tandis que la deuxième portion de corps de roulement (64b) présente un diamètre variable sur la longueur.

5. Installation selon la revendication 4, **caractérisée en ce que** la surface d'enveloppe de la première portion de corps de roulement (64a) présente un coefficient de friction plus élevé que la surface d'enveloppe de la deuxième portion de corps de roulement (64b).

6. Installation selon l'une quelconque des revendications précédentes, **caractérisée en ce qu'**un capteur d'angle de fibres (55) est prévu, lequel est prévu pour déterminer un angle de fibres du produit semi-fini fibreux cisaillé (1), le dispositif de commande (80) étant prévu pour ajuster la différence de vitesse périphérique en fonction de l'angle de fibres détecté afin de provoquer une courbure prédéfinie de la préforme profilée (5).

7. Installation selon l'une quelconque des revendications précédentes, **caractérisée en ce qu'**un dispositif d'alimentation de bande de sangle (90) est prévu, lequel est réalisé pour acheminer et introduire des bandes de sangle supplémentaires (91) en matériau fibreux dans au moins une portion de sangle (3a, 3b).

8. Installation selon la revendication 7, **caractérisée en ce que** le dispositif d'alimentation de bande de sangle (90) achemine les bandes de sangle supplémentaires (91) au premier et/ou au deuxième corps de roulement du dispositif de variation de section transversale (60) et introduit les bandes de sangle supplémentaires (91) par le biais du premier et/ou du deuxième corps de roulement du dispositif de variation de section transversale (60) dans la portion de sangle respective (3a, 3b).

9. Installation selon la revendication 7 ou 8, **caractérisée en ce que** le dispositif d'alimentation de bande de sangle (90) est réalisé pour ajuster une position prédéfinie des bandes de sangle supplémentaires (91) par rapport à la hauteur de sangle de la portion de sangle respective (3a, 3b).

10. Installation selon l'une quelconque des revendications précédentes, **caractérisée en ce qu'**un dispositif de coupe (70) est prévu, lequel est réalisé pour le délignage du contour final des portions de sangle (3a, 3b) de la préforme profilée courbée (5).

11. Installation selon l'une quelconque des revendications précédentes, **caractérisée en ce qu'**au moins l'un des corps de roulement du dispositif de variation de section transversale (60) est réalisé, dans un plan de produit semi-fini fibreux défini par le produit semi-fini fibreux (1) s'appliquant par engagement par force, de manière à pouvoir pivoter ou basculer pendant le déplacement transversalement à la direction de transport.

12. Procédé de fabrication en continu d'une préforme profilée courbée (5) à partir de produits semi-finis fibreux plats (1) pour fabriquer un composant composite renforcé par des fibres, comprenant les étapes suivantes :
- fournir un produit semi-fini fibreux plat (1) ;
- façonner le produit semi-fini fibreux plat (1) de telle sorte qu'une première portion de sangle (3a) soit formée à partir d'une première portion latérale (2a) du produit semi-fini fibreux (1) et qu'une deuxième portion de sangle (3b) soit formée à partir d'une deuxième portion latérale (2b) du produit semi-fini fibreux (1),
- cisailler le produit semi-fini fibreux (1) en appliquant deux corps de roulement rotatifs (51, 52), disposés à distance l'un de l'autre dans une direction de transport, par engagement par force contre l'une des portions de sangle (3a, 3b) et en ajustant une différence de vitesse périphérique entre les deux corps de roulement de telle sorte qu'un cisaillement des fibres soit provoqué entre les corps de roulement pour former la courbure de la préforme profilée à fabriquer (5), et ensuite
- faire varier une hauteur de nervure d'une portion de nervure (4) définie entre les portions de sangle (3a, 3b), en appliquant deux corps de roulement à chaque fois par engagement par force contre une portion de sangle (3a, 3b) et en déplaçant au moins l'un des corps de roulement transversalement à la direction de transport de telle sorte qu'une hauteur de nervure prédéfinie soit ajustée.

13. Procédé selon la revendication 12, **caractérisé en ce que** l'angle de fibres du produit semi-fini fibreux cisaillé (1) est déterminé au moyen d'un capteur d'angle de fibres (55), la différence de vitesse de rotation étant ajustée pendant le cisaillement des fibres en fonction de l'angle de fibres déterminé afin de provoquer une courbure prédéfinie de la préforme profilée (5).

14. Procédé selon la revendication 12 ou 13, **caractérisé en ce que** des bandes de sangle supplémentaires (91) en matériau fibreux sont introduites dans au moins une portion de sangle (3a, 3b).

15. Procédé selon la revendication 14, **caractérisé en ce qu'**une position prédéfinie des bandes de sangle supplémentaires (91) est ajustée par rapport à la hauteur de sangle de la portion de sangle respective (3a, 3b).

16. Procédé selon l'une quelconque des revendications 12 à 15, **caractérisé en ce qu'**un délignage du contour final des portions de sangle (3a, 3b) est effectué au moyen d'un dispositif de coupe (70).

17. Procédé selon l'une quelconque des revendications 12 à 16, **caractérisé en ce que** pendant la variation de la hauteur de nervure, par déplacement d'au moins l'un des corps de roulement transversalement à la direction de transport, le corps de roulement est pivoté ou basculé dans un plan de produit semi-fini fibreux défini par le produit semi-fini fibreux (1) s'appliquant par engagement par force.
